# EUROPEAN PATENT APPLICATION

(11) **EP 4 269 866 A1**
(43) Date of publication of application: **01.11.2023**
(21) Application number: 22170263.2
(22) Date of filing: 27.04.2022
(51) Int. Cl.: F21S 9/02, F21V 7/00, F21V 5/04, G02B 6/00, F21Y 115/10

(54) **READY-TO-APPLY EMERGENCY LUMINAIRE**

(71) Applicant: Tridonic GmbH & Co. KG, 6851 Dornbirn (AT)
(72) Inventor: WILSON, Ian, 6850 Dornbirn (AT)
(74) Representative: Kiwit, Benedikt

(57) **Abstract**

The present invention is directed to a ready-to-apply emergency luminaire (1), comprising an LED module (2), an optical element (5), and a casing (8). The LED module (2) comprises an LED light source (3) for emitting light in a main light emission direction (M). The optical element (5) comprises a light guide bar (6) and a lens (7). The light guide bar (6) extends along an extension axis (X). The extension axis (X) is angled with respect to the main light emission direction (M). The light guide bar (6) comprises a couple section (60) for coupling the light emitted by the LED light source (3) into the light guide bar (6), a redirecting section (62) for redirecting the coupled-in light to travel through the light guide bar (6) along a travel direction (T) parallel to the extension axis (X), and an output section (63) for outputting the redirected light from the light guide bar (6). The lens (7) comprises an input section (70) for inputting the output light into the lens (7), and an emission section (71) for emitting the input light from the ready-to-apply emergency luminaire (1). The casing (8) extends longitudinally along the extension axis (X), and houses the LED module (2) and at least part of the light guide bar (6).

## Description

The present invention refers to ready-to-apply emergency luminaires.

This type of ready-to-apply emergency luminaires is well known in the prior art. A key feature of these luminaires is that they are extremely small so that the luminaire is unobtrusive inside an application. The small dimensions of the light emission side (i.e. a lens) makes it difficult to sufficiently cool the light source (i.e. LED module) used in the ready-to-apply luminaire which affects the life span of the light source and the lens. In addition, the optical distribution of the light source is limited, as the LED module carrying the light source (i.e. LED) is usually located, e.g., directly under the lens.

It is thus an object of the present invention to provide a ready-to-apply emergency luminaire, which allows for an efficient and component-preserving operation while allowing for a small overall size and a flexible use.

This object is obtained by the independent claims. The dependent claims study further the central idea of the present invention.

According to a first aspect, the present invention is directed to a ready-to-apply emergency luminaire. The ready-to-apply emergency luminaire comprises an LED module having at least one LED light source for emitting light in a main light emission direction. The luminaire further comprises an optical element. The optical element comprises a light guide bar and a lens. The light guide bar extends along an extension axis. The extension axis is angled with respect to the main light emission direction. The light guide bar comprises a couple section for coupling the light emitted by the LED light source into the light guide bar, a redirecting section for redirecting the coupled-in light to travel through the light guide bar along a travel direction which is parallel to the extension axis, and an output section for outputting the redirected light from the light guide bar. The lens comprises an input section for inputting the output light (i.e. the light output from the light guide bar) into the lens, and an emission section for emitting the input light from the ready-to-apply emergency luminaire. The ready-to-apply emergency luminaire further comprises a casing extending longitudinally along the extension axis, and housing the LED module and at least part of the light guide bar.

The ready-to-apply emergency luminaire according to the present invention uses, even though having miniaturised dimensions, a light guide bar for coupling in and directing the light of an LED sight source. The light guide bar is further optically coupled with a lens to allow for a desired light emission. Hence, the LED light source or LED module can be positioned at a desired position in the casing to thus thermally decouple or at least distance this element as desired, e.g. from the lens, to reduce thermal impact of the LED module, e.g. to the lens. Further, the LED module can thus be positioned in a manner allowing for an improved heat dissipation, as desired, without affecting the optical characteristics of the ready-to-apply emergency luminaire; particularly over its lifetime. This also expands the life span of the overall ready-to-apply emergency luminaire; particularly of the LED module on the one side and the optical element including the lens on the other side. Making the LED module on the one hand and the optical element - particularly the lens - on the other hand spacially independent from each other, allows for optimising these components according to the required and desired needs. For instance, the design of the lens can be chosen for an optimised light emission characteristic, as desired. Also, the LED module can use any desired size to allow for corresponding application of electric and electronic components and sufficient heat dissipation. In addition, this concept allows for the lens to occupy, if desired, the complete head area of the ready-to-apply emergency luminaire, which results in an optically optimised emergency luminaire with miniaturised dimensions.

The optical element can be integral. For instance, the optical element can be provided as an integral plastic element, e.g. made by injection moulding or casting. The optical element being integral facilitates the handling of this element and increases its optical characteristics.

The light guide bar and the lens are preferably integral. Hence, the number of parts can be reduced and these elements can be easily handled. Also, the optical characteristics can be improved.

The optical element and/or the light guide bar and/or the lens can be a solid material body, respectively. Hence, the optical characteristics, particularly the light transmission ability, can be optimized.

The optical element and/or the light guide bar and/or the lens can be made of a plastic material. This can particularly be obtained as the heat management of the described ready-to-apply emergency luminaire can be optimised, as desired, and particularly the LED module can be thermally decoupled from the optical element - particularly the lens - or at least allows for an improved heat dissipation with severely limited effect on the optical element, so that cheaper materials with respect to costs and production - e.g. compared to glass lenses - can be used, while having the same or even improved optical characteristics.

The output section and the input section can be connected, and are preferably integral. Hence, the optical element can be easily handled. Also, the optical characteristics can be improved as the light can travel through a single and preferably solid material body of the optical element.

A combined light guide bar and optical element can thus be provided for improved light transmission abilities and characteristics, for an easier manufacturing, assembly and handling as well as for a reduced number of parts.

The light guide bar may comprise a recess section, which comprises the couple section. Hence, the couple section can be provided at an optically desired and specifically designed section of the light guide bar. Preferably, the recess section houses at least part of the LED light source or the complete LED light source. Hence, the ready-to-apply emergency luminaire can be even further miniaturised with still a good or even improved light emission ability.

The main light emission direction and the extension axis may enclose a defined angle a, which preferably is at about α = 90°. Hence, the arrangement of the LED light source with respect to the light guide bar can be designed as required and desired. The main light emission direction and the extension axis are preferably oriented orthogonal to each other. The 90° arrangement or orthogonal orientation with respect to each other allows for a maximum compact layout and arrangement of the LED light source or even LED module with respect to the light guide bar, as they can thus be arranged, e.g., side-by-side to each other. Hence, the ready-to-apply emergency luminaire can be effectively miniaturised. Due to the use of the light guide bar, this can be done without negatively affecting the lighting efficiency.

The redirecting section can be angled with respect to the main light emission direction so as to redirect the coupled-in light by total internal reflection (i.e. TIR). Hence, a maximum light efficiency can be achieved without using additional parts, i.e. by simply using the light guide bar and its defined design of the redirecting section. The redirecting section is thus provided as an angled section or flat angled side or end section of the light guide bar with respect to the main light emission direction.

The redirecting section may comprise a reflector or reflective material so as to redirect the coupled-in light. By using such a reflector or reflective material, the light efficiency can be further improved or redirection can be obtained even without being limited by relative orientations to obtain total internal reflection. The reflector can be a separate element, which can be, for instance, attached to the light guide bar at the redirecting section. It is also possible that the redirecting section is, for instance, coated with a reflective material.

The optical element may comprise at least two light guide bars, which preferably extend parallel to each other. In this regard, the LED module may comprise at least one LED light source per light guide bar, each being optically coupled to the coupled section of the related light guide bar for coupling the light emitted by the respective LED light source into the related light guide bar. This allows for the use of different LED light sources, e.g., having different light characteristics like colour or light intensity. A different lighting characteristic may also be obtained by simply having the two or more light guide bars be separated, thus resulting in a different light emitting characteristic, if desired.

The emission section may be opposite to the input section. Hence, an effective light transmission path can be provided. Also, a most effective light output through the lens can be obtained.

The emission section may be opposite to the light guide bar. This also allows for a most effective light transmission path and light distribution via the lens. Also, this allows for a most compact layout of the optical element having the input section and the emission section and the light guide bar arranged in a row. Hence, the dimensions of the optical element, when seen along the extension axis, can be minimised and may only be defined by the lens itself to thus obtain a most miniaturised ready-to-apply emergency luminaire.

The emission section may comprise at least one lens section per LED light source and/or per light guide bar for a defined light emission. Hence, a particular section of the emission section can be provided to most accurately design the light emission characteristics. In case of having two or more LED light sources and preferably also two or more light guide bars, the versatility of the ready-to-apply emergency luminaire can be even further increased as it allows to operate with different light emission characteristics (e.g. direction, colour, light intensity, etc.).

The lens section can preferably be convexly bulged away from or concavely bulged toward the optically related light guide bar so to obtain a desired narrowing, spreading or otherwise directing of the emitted light.

The emission section or, if present, the lens section maybe designed such that the input light is emitted symmetrical or asymmetrical with respect to the extension axis or travel direction. A symmetrical light emission would be suitable, e.g., for an anti-panic luminaire or an information luminaire. An asymmetrical light emission maybe useful, e.g., for an escape route luminaire or a defined emergency spot luminaire or an anti-panic luminaire. If having a plurality of lens sections, they can be different with respect to symmetry or asymmetry with respect to the extension axis or travel direction.

The LED module preferably comprises a PCB carrying the LED light source. Hence, a self-sustained LED module can be provided. The LED module can further be designed at a sophisticated level as desired.

The PCB preferably extends in a plane. Hence, the PCB can be provided in a most compact manner. The plane may preferably be oriented parallel to the extension axis. Hence, the arrangement of the PCB and the optical element and, in particular, the light guide bar can be arranged in a most compact manner to thus allow for a highly miniaturised ready-to-apply emergency luminaire.

The PCB preferably extends longitudinally parallel to the light guide bar and/or parallel to the extension axis. Hence, the PCB can be positioned in a space, e.g. at a rear side of the lens, to obtain a most compact layout of the luminaire.

The LED light source is preferably provided at a portion of the PCB being distant from the lens. Particularly, the LED light source maybe provided at or close to an end of the PCB being most distant from the lens. Hence, the light can travel a maximum length through the light guide bar to thus allow for sufficient mixing of the light for a most homogenous light emission. Also, as the LED light source is provided (e.g. most) distant from the lens, heat dissipation during operation of the LED module occurs at a most distant position with respect to the lens, so that the lens can be thermally decoupled as best from the LED module or LED light source. Hence, the efficiency and life span of the lens can be increased.

The PCB may be releasably housed in the casing. Hence, the ready-to-apply emergency luminaire can be easily assembled and serviced, e.g., for maintenance reasons.

The PCB may be in thermal contact with the casing. Hence, heat transfer can be easily obtained thus increasing the operation efficiency and life span of all components of the ready-to-apply emergency luminaire, particularly of the optical element and the LED module. Also, the optical element can be decoupled from a thermal impact of the LED module as good as possible.

The casing may extend rearwardly from the lens. Hence, the ready-to-apply emergency luminaire can be designed, at least when seen along the extension axis, in a most compact manner. All components can be provided "behind" the lens. Preferably, the casing may extend rearwardly from a rear section surrounding the input section, so that the ready-to-apply emergency luminaire is provided in a most compact manner while not affecting the light emission ability.

The optical element or at least the lens on the one hand and the casing on the other hand can preferably be fixedly connected to each other. Hence, the ready-to-apply emergency luminaire can be easily handled and mounted, as desired. The optical characteristic can thus be ensured even during assembly of the ready-to-apply emergency luminaire. Preferably, the optical element and the casing are fixed and connected in a releasable manner. Hence, the ready-to-apply emergency luminaire can be equipped with different optical elements to provide a light emission characteristic as desired. Hence, different types of emergency luminaires can be provided for various emergency use cases (e.g. escape route, anti-panic, spots, etc.). Similarly, also the components of the optical element or at least the lens may be fixedly connected to the casing, preferably in a releasable manner. Hence, the same light guide bar can be used along with different lenses for the same purpose, as described. The optical element or lens can be easily coupled to the casing, e.g. by a simple clip mechanism, which allows for an easy interchange ability between the different lenses or lens types.

The casing may completely house the LED module and the light guide bar. Hence, the ready-to-apply emergency luminaire can be provided in a most compact manner, while the functional components like LED module and light guide bar are securely protected inside the casing, e.g. from mechanical impacts.

In a preferred embodiment, at least the LED module or even the parts of the optical element, which are provided inside the casing, can be potted in the casing. Hence, the interior elements and particularly the electric or electronic components, like the LED module, are securely positioned and fixed inside the casing and are preferably even further protected against moisture, humidity, water or other alike impacts.

The casing, when seen along the extension axis, may have a circular, oval, square, or rectangular cross-section or any other cross-sectional shape. Hence, the ready-to-apply emergency luminaire can be designed as required and desired according to the user's needs, and may further be adapted to the mounting location.

The casing, orthogonal to the extension axis, may have a diameter being smaller than or equal to 20 mm, or smaller than or equal to 15 mm, or smaller than or equal to 12 mm, or smaller than or equal to 10 mm. Hence, the ready-to-apply emergency luminaire can be provided in a most compact and miniaturised manner so as to be most unobtrusively provided inside an application.

The casing may be made of a heat-conducting material, preferably made of metal or plastic. Hence, heat during operation of the luminaire can be effectively transferred and dissipated, preferably away from the optical element, to thus increase the overall efficiency and life span of the luminaire.

The casing may comprise a mounting structure being provided at its outer surface. Hence, the ready-to-apply emergency luminaire can be easily attached to any desired mounting area. Preferably, the mounting structure is provided about the extension axis so that an effective mounting can be provided. Preferably, the mounting structure is suitable for cooperating with a corresponding mounting area by form-fit connection and/or frictional connection for mounting the ready-to-apply emergency luminaire. Hence, the mounting ability can be provided as desired according to the user's needs.

Preferably, the mounting structure may comprise a thread structure, a bayonet structure, a friction structure, and the like. Hence, a simple but effective mounting structure can be provided. For instance, the ready-to-apply emergency luminaire may simply mounted by screwing the luminaire via its mounting structure into a threaded hole.

The ready-to-apply emergency luminaire may further comprise an energy source for self-sustained operation of the ready-to-apply emergency luminaire. The energy source may be a battery or the like. In a preferred embodiment, the energy source is housed by - i.e. in - the casing and thus inside the same to thus allow for a most compact layout. The energy source can thus also be effectively protected from mechanical impacts. In a preferred embodiment, the LED module may comprise or carry the energy source, which further facilitates the overall layout and assembly of the ready-to-apply emergency luminaire.

According to another aspect, the present invention is directed to a kit for assembling a ready-to-apply emergency luminaire according to the present invention. The kit comprises a plurality of the optical elements, preferably having different types and/or numbers of lenses and/or different types and/or numbers of light guide bars. The kit may further comprise a plurality of LED modules, preferably having different types and/or numbers of LED light sources and, if present, of PCBs. The kit may further comprise a plurality of casings, preferably having different shapes and/or dimensions.. Hence, a ready-to-apply emergency luminaire can be easily assembled as desired, with any desired type of LED (module), light emission characteristic, mounting layout, etc., so as to provide a most flexible kit for assembling a plurality of types of ready-to-apply emergency luminaires, as desired.

Further configurations, features and advantages of the present invention will be described with a view to the drawings of the enclosed figures.
- Figure 1: shows a cross-sectional side view of a ready-to-apply emergency luminaire according to a first embodiment of the present invention,
- Figure 2: shows a cross-sectional front view of the ready-to-apply emergency luminaire according to figure 1,
- Figure 3: shows a perspective view of a ready-to-apply emergency luminaire according to a second embodiment of the present invention without showing the lens,
- Figure 4: shows a detail of the ready-to-apply emergency luminaire according to figure 3 in a cross-sectional side view, and
- Figure 5: shows a cross-sectional front view of a ready-to-apply emergency luminaire according to a third embodiment of the present invention.

The figures show different embodiments of a ready-to-apply emergency luminaire 1 according to the present invention. The ready-to-apply emergency luminaire 1 can be any type of emergency luminaire 1, like an escape route luminaire, anti-panic luminaire, spot luminaire, and the like.

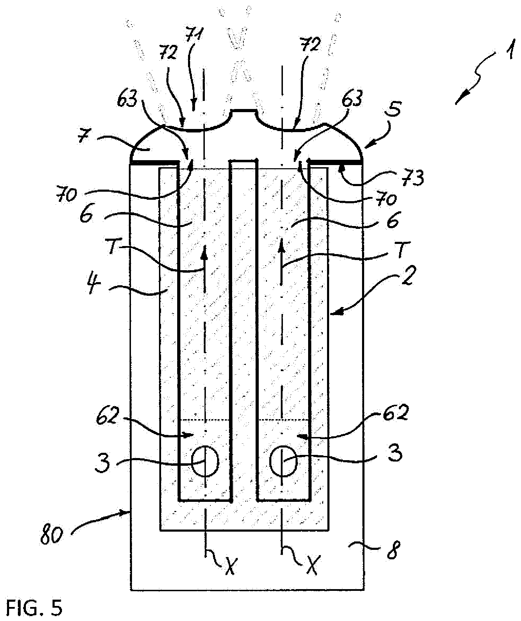

The luminaire 1 comprises an LED module 2, as can be seen in all figures. The LED module 2 comprises at least one LED light source 3 for emitting light in a main light emission direction M. As can be seen in figure 5, the LED module 2 may have more than one LED light sources 3; here two LED light sources 3.

The LED module 2 may comprise a PCB 4 carrying the LED light source(s) 3, as can be seen in all figures.

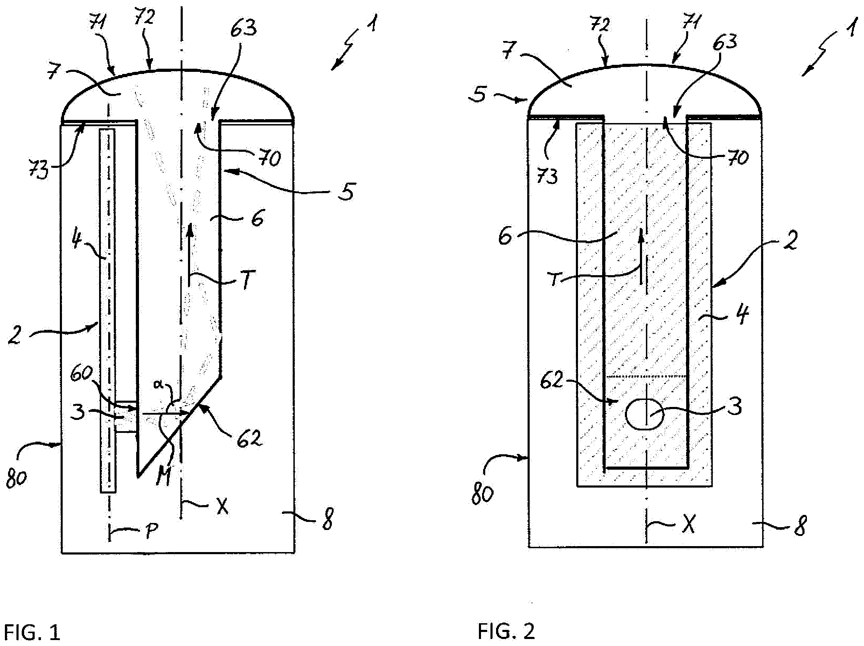

The ready-to-apply emergency luminaire 1 further comprises an optical element 5. As can be seen in figures 1, 2 and 5, the optical element 5 comprises a light guide bar 6 and a lens 7. The optical element 5 can be integral, as shown in figures 1, 2 and 5. The optical element 5 can be a solid material body. In particular, the light guide bar 6 and the lens 7 may be integral. The light guide bar 6 and/or the lens 7 may be a solid material body, respectively. The optical element 5 and/or the light guide bar 6 and/or the lens 7 can be made of a plastic material or glass.

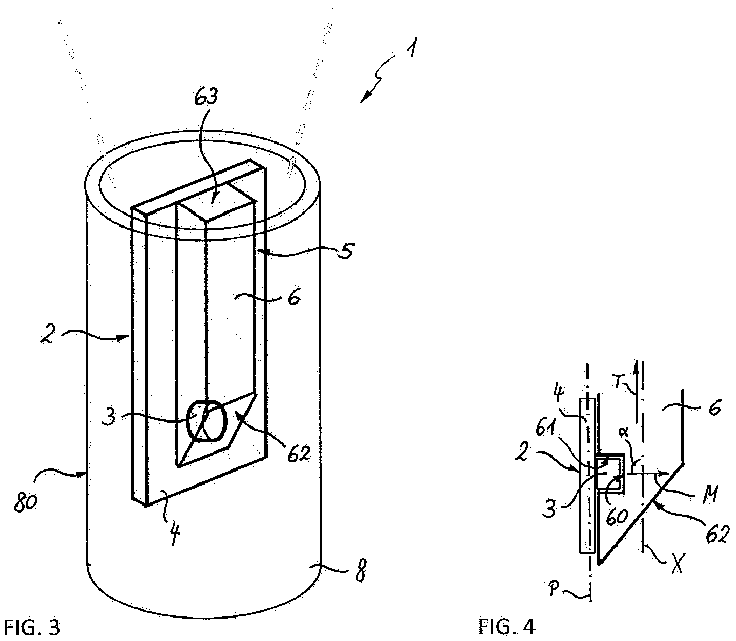

The light guide bar 6 extends along an extension axis X. The extension axis X is angled with respect to the main light emission direction M, as can be seen in figures 1 and 4. The main light emission direction M and the extension axis X may enclose a defined angle a, which is preferably at α = 90°. The main light emission direction M and extension axis X are preferably oriented orthogonal to each other. This can be derived from figures 1 and 4.

The light guide bar 6 comprises a couple section 60 for coupling the light emitted by the LED light source 3 into the light guide bar 6.

As shown in the embodiment of figures 3 and 4, the light guide bar 6 may comprise a recess section 61, which here comprises the couple section 60 and, as shown, preferably houses at least part of - and here completely - the LED light source 3.

With reference to figure 5, the optical element 5 may comprise at least two or even more light guide bars 6, which preferably extend parallel to each other, as exemplarily shown in figure 5. The LED module 2 may then comprise at least one LED light source 3 per light guide bar 6, each being optically coupled to the couple section 60 of the related light guide bar 6 for coupling the light emitted by the LED light source 3 into the related light guide bar 6.

The light guide bar 6 further comprises a redirecting section 62, as exemplarity shown in figures 1 and 4, for redirecting the coupled-in light to travel through the light guide bar 6 along a travel direction T, the travel direction T being parallel to the extension axis X.

The redirecting section 62 can be angled with respect to the main light emission direction M, as shown in figures 1 and 4, so as to redirect the coupled-in light by total internal reflection.

The redirecting section 62 may also comprise a reflector or reflective material so as to redirect the coupled-in light accordingly, i.e. to travel through the light guide bar 6 along a travel direction T.

The light guide bar 6 further comprises an output section 63 for outputting the redirected light from the light guide bar 6. This output section 63 is exemplarily shown in figures 1, 2 and 5.

The lens 7 comprises an input section 70 for inputting the output light into the lens 7. The output section 63 and the input section 70 may be connected; preferably, they are integrally formed, as exemplarily shown in figures 1, 2 and 5.

The lens 7 further comprises an emission section 71 for emitting the input light from the ready-to-apply emergency luminaire 1; i.e. to an outside.

The emission section 71 is preferably opposite to the input section 70 as shown in figures 1, 2 and 5. As also shown in these figures, the emission section 71 is preferably opposite to the light guide bar 6 or - as shown in figure 5 - the light guide bars 6.

The emission section 71 may comprise at least one lens section 72 per LED light source 3 and/or per light guide bar 6 for a defined light emission. In the embodiment of figures 1 and 2, the lens section 72 is the upper outer surface of the lens 7. In the embodiment of figure 5, the lens sections 72 are here provided for each of the LED light sources 3 or light guide bars 6, respectively, and they are defined as separate and structurally distinguishable sections 72 provided in the upper top surface of the lens 7. The lens section 72 can be convexly bulged away from (see figures 1 and 2) or concavely bulged toward (see figure 5) the optically related light guide bar 6.

The emission section 71 or, if present, the lens section 72 can be designed such that the input light is emitted symmetrical (see figures 1 and 2) or asymmetrical (see figure 5) with respect to the extension axis X or travel direction T.

The ready-to-apply emergency luminaire 1 further comprises a casing 8 extending longitudinally along the extension axis X. The casing 8 houses the LED module 2 and at least part of - and here completely - the light guide bar 6.

Preferably, the PCB 4 can be releasably housed in the casing 8.

The PCB 4 can be in thermal contact with the casing 8 for an improved heat dissipation of the LED module 2.

As is exemplarity shown in figure 1, the PCB 4 may extend in a plane P, which plane P is preferably oriented parallel to the extension axis X. The PCB 4 preferably extends longitudinally parallel to the light guide bar 6 and/or parallel to the extension axis X, as exemplarily shown in figure 1 as well.

As can be seen in all the figures, the LED light source(s) 3 can be provided at a portion of the PCB 4 being (most) distant from the lens 7; here at a lower end of the optical element 5. Hence, heat generated by the LED module and particularly the LED is produced at a position most distant from the lens, and thus the optical output area (upper surface of lens 7 in the figures) of the ready-to-apply emergency luminaire 1. Moreover, a light travel path can be maximised to thus allow for a most homogenous light mixing and thus light emission.

As can be seen in figures 1, 2 and 5, the casing 8 extends rearwardly from the lens 7, and preferably from a rear section 73 surrounding the input section 70 or input sections 70.

The optical element 5 or at least the lens 7 on the one hand and the casing 8 on the other hand can be fixedly connected to each other; this preferably in a releasable manner, e.g. by a simple clip mechanism to increase the versatility of the ready-to-apply emergency luminaire 1.

As depicted in figures 1, 2 and 5, the casing 8 completely houses the LED module 2 and the light guide bar(s) 6, to thus securely protect all of these elements inside the casing 8. At least the LED module 2 or even any of the components provided inside the casing 8 may be potted in the casing 8.

The casing 8, when seen along the extension axis X, may have a circular cross-section, as shown in the embodiments and particularly derivable from figure 3. The cross-section may also have any other shape, like oval, square, rectangular and the like.

The casing 8, orthogonal to the extension axis X, may have a diameter being smaller than or equal to 20 mm or 15 mm or 12 mm or 10 mm.

The casing 8 can be made of a heat-conducting material, and is preferably made of metal or plastic.

The casing may comprise a mounting structure provided at its outer surface 80, preferably about the extension axis X. The mounting structure is suitable for cooperating with a corresponding mounting area by form-fit connection and/or frictional connection for mounting the ready-to-apply emergency luminaire 1. The mounting structure may comprise a thread structure, a bayonet structure, a friction structure, or the like.

The ready-to-apply emergency luminaire 1 may further comprise an energy source (not shown) for self-sustained operation of the ready-to-apply emergency luminaire 1. The energy source may be housed by - i.e. in - the casing 8 as well. The LED module 2 may comprise or carry the energy source.

A kit for assembling a ready-to-apply emergency luminaire 1 according to the present invention as desired can be provided. Therefore, the kit may comprise a plurality of the optical elements 5, preferably having different types and/or numbers of lenses and/or different types and/or numbers of light guide bars 6. The kit may comprise a plurality of LED modules 2, preferably having different types and/or numbers of LED light sources 3. The kit may comprise a plurality of casings 8, preferably having different shapes and/or dimensions.

The present invention is not limited by the embodiments described herein above as long as being covered by the appended claims.

## Claims

1. Ready-to-apply emergency luminaire (1), comprising:
• an LED module (2) having an LED light source (3) for emitting light in a main light emission direction (M),
• an optical element (5) comprising:
∘ a light guide bar (6) extending along an extension axis (X), wherein the extension axis (X) is angled with respect to the main light emission direction (M), wherein the light guide bar (6) comprises:
▪ a couple section (60) for coupling the light emitted by the LED light source (3) into the light guide bar (6),
▪ a redirecting section (62) for redirecting the coupled-in light to travel through the light guide bar (6) along a travel direction (T) parallel to the extension axis (X), and
▪ an output section (63) for outputting the redirected light from the light guide bar (6), and
∘ a lens (7) having
▪ an input section (70) for inputting the output light into the lens (7), and
▪ an emission section (71) for emitting the input light from the ready-to-apply emergency luminaire (1), and
• a casing (8) extending longitudinally along the extension axis (X), and housing the LED module (2) and at least part of the light guide bar (6).

2. Ready-to-apply emergency luminaire (1) according to claim 1,
wherein the optical element (5) is integral, and/or
wherein the light guide bar (6) and the lens (7) are integral, and/or
wherein the output section (63) and the input section (70) are connected, preferably integral.

3. Ready-to-apply emergency luminaire (1) according to any one of the preceding claims, wherein the light guide bar (6) comprises a recess section (61), which comprises the couple section (60) and preferably houses at least part of the LED light source (3).

4. Ready-to-apply emergency luminaire (1) according to any one of the preceding claims,
wherein the main light emission direction (M) and the extension axis (X) enclose a defined angle a, preferably with α = 90°, and/or
wherein the main light emission direction (M) and the extension axis (X) are preferably oriented orthogonal to each other.

5. Ready-to-apply emergency luminaire (1) according to any one of the preceding claims, wherein the redirecting section (62) is angled with respect to the main light emission direction (M) so as to redirect the coupled-in light by total internal reflection, and/or wherein the redirecting section (62) comprises a reflector or reflective material so as to redirect the coupled-in light.

6. Ready-to-apply emergency luminaire (1) according to any one of the preceding claims, wherein the optical element (5) comprises at least two light guide bars (6) which preferably extend parallel to each other, wherein the LED module (2) comprises at least one LED light source (3) per light guide bar (6), each being optically coupled to the couple section (60) of the related light guide bar (6) for coupling the light emitted by the respective LED light source (3) into the related light guide bar (6).

7. Ready-to-apply emergency luminaire (1) according to any one of the preceding claims,
wherein the emission section (71) being opposite to the input section (70) and/or opposite to the light guide bar (6), and/or
wherein the emission section (71) comprises at least one lens section (72) per LED light source (3) and/or per light guide bar (6) for a defined light emission, wherein the lens section (72) preferably is convexly bulged away from or concavely bulged toward the optically related light guide bar (6), and/or
wherein the emission section (71) or, if present, the lens section (72) is designed such that the input light is emitted symmetrical or asymmetrical with respect to the extension axis (X) or travel direction (T).

8. Ready-to-apply emergency luminaire (1) according to any one of the preceding claims,
wherein the LED module (2) comprises a PCB (4) carrying the LED light source (3),
wherein preferably the PCB (4) extends in a plane (P), wherein the plane is preferably oriented parallel to the extension axis (X),
wherein preferably the PCB (4) extends longitudinally parallel to the light guide bar (6) and/or parallel to the extension axis (X),
wherein preferably the LED light source (3) is provided at a portion of the PCB (4) being distant from the lens (7).

9. Ready-to-apply emergency luminaire (1) according to claim 8,
wherein the PCB (4) is releasably housed in the casing (8), and/or
wherein the PCB (4) is in thermal contact with the casing (8).

10. Ready-to-apply emergency luminaire (1) according to any one of the preceding claims,
wherein the casing (8) extends rearwardly from the lens (7), preferably from a rear section (73) surrounding the input section (70), and/or
wherein the optical element (5) or at least the lens (7) on the one hand and the casing (8) on the other hand are fixedly connected to each other, preferably in a releasable manner.

11. Ready-to-apply emergency luminaire (1) according to any one of the preceding claims,
wherein the casing (8) completely houses the LED module (2) and the light guide bar (6), and/or
wherein at least the LED module (2) is potted in the casing (8).

12. Ready-to-apply emergency luminaire (1) according to any one of the preceding claims,
wherein the casing (8), when seen along the extension axis (X), has a circular, oval, square, rectangular cross-section, and/or
wherein the casing (8), orthogonal to the extension axis (X), has a diameter being smaller than or equal to 20mm or 15mm or 12mm or 10mm, and/or
wherein the casing (8) is made of a heat conducting material, preferably made of metal or plastic.

13. Ready-to-apply emergency luminaire (1) according to any one of the preceding claims,
wherein the casing (8) comprises a mounting structure provided at its outer surface (80), preferably about the extension axis (X), suitable for cooperating with a corresponding mounting area by form fit connection and/or frictional connection for mounting the ready-to-apply emergency luminaire (1),
wherein preferably the mounting structure comprises a thread structure, a bayonet structure, or a friction structure.

14. Ready-to-apply emergency luminaire (1) according to any one of the preceding claims, further comprising an energy source for self-sustained operation of the ready-to-apply emergency luminaire (1),
wherein preferably the energy source is housed by the casing (8),
wherein the LED module (2) comprises or carries the energy source.

15. Kit for assembling a ready-to-apply emergency luminaire (1) according to any one of the preceding claims, comprising:
• a plurality of the optical elements (5), preferably having different types and/or numbers of lenses (7) and/or different types and/or numbers of light guide bars (6), and/or
• a plurality of LED modules (2), preferably having different types and/or numbers of LED light sources (2), and/or
• a plurality of casings (8), preferably having different shapes and/or dimensions.
